# EUROPÄISCHE PATENTANMELDUNG

(11) **EP 2 644 921 A1**
(43) Veröffentlichungstag der Anmeldung: **02.10.2013**
(21) Anmeldenummer: 13158490.6
(22) Anmeldetag: 11.03.2013
(51) Int. Cl.: F16C 35/04, F16C 35/063, F16C 41/00, F16C 23/08

(54) **Wälzlageranordnung mit Messaufnehmer und Messgeber am drehbaren Lagerring eines in einem Lagergehäuse aufgenommenen Wälzlagers**

(30) Priorität: 28.03.2012 DE 102012006158
(71) Anmelder: Schaeffler Technologies AG & Co. KG, 91074 Herzogenaurach (DE)
(72) Erfinder: Gerner, Armin, 96178 Pommersfelden (DE); Wittmann, Bernd, 96178 Pommersfelden (DE); Beresch, Eduard, 97529 Sulzheim (DE); Spohn, Markus, 91097 Oberreichenbach (DE)

(57) **Zusammenfassung**

Die Erfindung betrifft eine Lageranordnung (1) umfassend ein in einem anschraubbaren Gehäuse (2) aufgenommenes Wälzlager (5) mit einem Außenring, einem Innenring (7) sowie einer Vielzahl von Wälzkörpern (8), die zwischen dem Außenring (6) und dem Innenring (7) um eine Rotationsachse (9) des Wälzlagers (5) abrollen, wobei entweder der Außenring (6) oder der Innenring (7) gegenüber dem Gehäuse (2) drehfest festgelegt ist und der jeweils andere Lagerring gegenüber dem Gehäuse (2) drehbar ist. Erfindungsgemäß ist vorgesehen, dass ein Messaufnehmer (10) drehfest mit dem Gehäuse (2) verbunden ist und dass ein mit dem Messaufnehmer (10) zusammenwirkender Messgeber (11) drehfest mit dem gegenüber dem Gehäuse (2) drehbaren Lagerring verbunden ist bzw. ein mit dem Messaufnehmer (10) zusammenwirkender Messgeber (11) durch den gegenüber dem Gehäuse (2) drehbaren Lagerring gebildet wird.

## Beschreibung

### Gebiet der Erfindung

Die Erfindung betrifft eine Lageranordnung umfassend ein in einem anschraubbaren Gehäuse aufgenommenes Wälzlager mit einem Außenring, einem Innenring sowie einer Vielzahl von Wälzkörpern, die zwischen dem Außenring und dem Innenring um eine Rotationsachse des Wälzlagers abrollen, wobei entweder der Außenring oder der Innenring gegenüber dem Gehäuse drehfest festgelegt ist und der jeweils andere Lagerring gegenüber dem Gehäuse drehbar ist.

### Hintergrund der Erfindung

Derartige Lageranordnungen zeichnen sich dadurch aus, dass sie über Schraubverbindungen mit einer Umgebungskonstruktion verbunden werden können. Beispiele hierfür sind Stehlager und Flanschlager, d.h. die jeweiligen Gehäuse zur Aufnahme der Wälzlager werden in diesen Fällen durch Stehlagergehäuse oder Flanschlagergehäuse gebildet.

Es ist einerseits bekannt, Wälzlager mit Messgebem und Messaufhehmern auszurüsten, die es erlauben die relative Drehzahl und/oder den relativen Drehwinkel zweier sich zueinander drehender Lagerringe zu bestimmen. Derartige Wälzlager sind jedoch sehr aufwendig in der Herstellung, benötigen eine Vielzahl von Bauteilen sowie einen gegenüber Standardlagem größeren Einbauraum.

Andererseits ist es bekannt, zur Bestimmung der Drehzahl und/oder des Drehwinkels einer in z.B. einem Stehlager gelagerten Welle einen Messgeber auf der Welle zu applizieren und einen mit diesem zusammenwirkenden Messaufnehmer an einer Umgebungskonstruktion anzubringen. Gegenüber einer in einem Wälzlager integrierten Messvorrichtung liegt zwar ein einfacherer Aufbau vor; es sind jedoch stets Anforderungen an den Bauraum der Umgebungskonstruktion nötig und die Montage ist aufwendig und teuer.

### Aufgabe der Erfindung

Der vorliegenden Erfindung liegt die Aufgabe zugrunde, eine gattungsgemäße Lageranordnung bereitzustellen, die auf einfache und kostengünstige Weise die Erfassung von Messgrößen, wie vorzugsweise der Drehzahl und/oder des Drehwinkels, eines in der Lageranordnung gelagerten Maschinenteiles ermöglicht, die einen geringen Platzbedarf aufweist und die einfach montiert werden kann.

### Beschreibung der Erfindung

Diese Aufgabe wird gelöst durch eine Lageranordnung gemäß dem unabhängigen Anspruch. Demzufolge ist eine gattungsgemäße Lageranordnung dadurch gekennzeichnet, dass ein Messaufnehmer drehfest mit dem Gehäuse verbunden ist und dass ein mit dem Messaufnehmer zusammenwirkender Messgeber drehfest mit dem gegenüber dem Gehäuse drehbaren Lagerring verbunden ist bzw. ein mit dem Messaufnehmer zusammenwirkender Messgeber durch den gegenüber dem Gehäuse drehbaren Lagerring gebildet wird.

Indem der Messgeber mit dem Messaufnehmer (z.B. Sensor) zusammenwirkt, ist es möglich Messgrößen wie Drehzahl und Drehwinkel des drehbaren Lagerringes aufzunehmen. Typischerweise wird es sich bei dem Lagerring um den Innenring handeln und die erfindungsgemäße Lageranordnung erlaubt somit die Erfassung von z.B. Drehzahl und Drehwinkel einer mit dem Innenring drehfest verbundenen Welle.

In jedem Fall ist der Messaufnehmer mit dem Gehäuse drehfest verbunden. Der Messgeber hingegen kann entweder mittelbar oder unmittelbar mit dem drehbaren Lagerring verbunden sein; d.h. der Messgeber wird durch ein gegenüber dem drehbaren Lagerring separates Bauteil gebildet. Alternativ kann der Messgeber direkt durch den sich drehenden Lagerring gebildet werden, d.h. der Messgeber ist einstückig durch diesen Lagerring ausgebildet. Sowohl der Messaufnehmer als auch der Messgeber werden vorzugsweise nicht nur drehfest mit dem Gehäuse bzw. dem sich drehenden Lagerring verbunden, sondern auch axial verschiebefest.

Ausführungsformen der vorliegenden Erfindung sind in den Unteransprüchen angegeben.

Bei dem Gehäuse, welches das Wälzlager aufnimmt, handelt es sich um ein anschraubbares Gehäuse, d.h. dieses Gehäuse kann über mehrere Schraubverbindungen mit einer Umgebungskonstruktion verbunden werden. Typischerweise besitzt das Gehäuse hierfür mehrere Gewinde(durchgangs)bohrungen. Gemäß Ausführungsformen der Erfindung handelt es sich dabei um ein Stehlagergehäuse oder ein Flanschlagergehäuse.

Gemäß einer Ausführungsform ist vorgesehen, dass der Messaufnehmer direkt an dem Gehäuse befestigt ist. Insbesondere kann das Gehäuse zur Befestigung des Messaufnehmers eine Bohrung und/oder einen Vorsprung aufweisen. Der Messaufnehmer kann mit dem Gehäuse lösbar verbunden werden, z.B. angeschraubt oder angeclipst werden, bzw. auch nicht-lösbar verbunden werden, z.B. angeklebt werden. Alternativ kann vorgesehen sein, dass der Messaufnehmer an einem Halteelement befestigt ist, welches drehfest mit dem Gehäuse verbunden ist.

Der Messgeber kann mit dem gegenüber dem Gehäuse drehbaren Lagerring durch Pressen, Nieten, Kleben, Klinchen, Clipsen, Löten oder Schweißen verbunden sein. Sofern der Messgeber mittelbar mit dem drehbaren Lagerring verbunden ist, kann der Messgeber z.B. mit einer Kronenmutter verbunden sein (Ausnehmungen der Kronenmutter können zur axialen oder radialen Detektion dienen). Denkbar ist auch, dass der Messgeber - z.B. bei einer Messung basierend auf dem induktiven Messprinzipt - durch eine Kronenmutter selbst gebildet wird.

Gemäß einer Ausführungsform ist vorgesehen, dass der mit dem Messgeber zusammenwirkende Messaufnehmer zur Erfassung einer Geschwindigkeit und/oder eines Drehwinkels des sich gegenüber dem Gehäuse drehbaren Lagerringes bzw. eines mit diesem Lagerring verbundenen Maschinenteils ausgelegt ist. Grundsätzlich kann die vorliegende Erfindung jedoch auch zur Erfassung weiterer Messgrößen, wie Vibration, genutzt werden.

Der Messaufnehmer bzw. der Messgeber können auf unterschiedliche physikalische Messprinzipen zurückgreifen. Denkbar ist beispielsweise, einen Hallsensor, einen MR-Sensor, einen induktiven Sensor, einen kapazitiven Sensor oder einen potentiometrischen Sensor als Messaufnehmer einzusetzen. Zwar ist es bereits ausreichend, einen einziges Paar von Messaufnehmer/Messgeber pro Lageranordnung (Gehäuse mit Wälzlager) einzusetzen. Dieses Paar liefert Messwerte wie z.B. Drehzahl/Drehwinkel in Bezug auf die entsprechende Lageranordnung - und ggf. auch in Bezug auf weitere, über z.B. eine Welle verbundene Lageranordnungen. Denkbar ist selbstverständlich auch, zwei oder mehrere Paare von Messaufnehmer/Messgeber in einer Lageranordnung vorzusehen. So könnten unterschiedliche Messwerte aufgenommen werden und/oder Messwerte durch unterschiedliche Messprinzipien verifiziert werden.

Der Messaufnehmer bzw. der Messgeber können über eine externe Energiequelle mittels eines Kabels mit Energie versorgt werden oder durch eine eigene Energieversorgung (Batterie bzw. im Wälzlager integrierter Generator) mit Energie versorgt werden.

Die erfindungsgemäße Lageranordnung kann überall dort eingesetzt werden, wo auf einfache und kostengünstige Weise eine Ermittlung von Drehzahl und/oder Drehwinkel eines drehbar gelagerten Maschinenteiles gewünscht ist. Hierbei kommen sowohl stationäre Anlagen als auch mobile Arbeitsmaschinen in Betracht.

### Kurze Beschreibung der Zeichnungen

Ein Ausführungsbeispiel der vorliegenden Erfindung wird im Folgenden anhand der beigefügten Figuren erläutert. Dabei zeigen
- Fig. 1: eine schematische Schnittdarstellung einer erfindungsgemäßen Lageranordnung und
- Fig. 2: eine schematische Frontansicht der erfindungsgemäßen Lageranordnung aus Fig. 1.

### Ausführliche Beschreibung der Zeichnungen

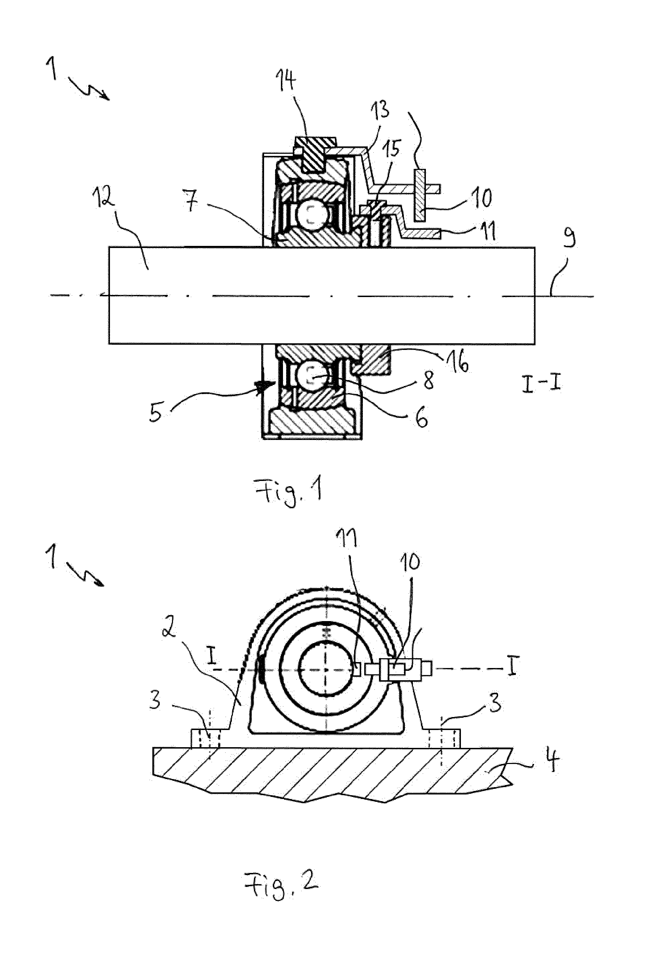

Fig. 1 und 2 zeigen eine erfindungsgemäße Lageranordnung 1. Die Lageranordnung 1 umfasst ein Gehäuse 2, welches ein Stehlagergehäuse ist, und über Bohrungen 3 sowie nicht dargestellte Schrauben mit einer Umgebungskonstruktion 4 verbunden werden kann.

In dem Gehäuse 2 ist ein Wälzlager 5 aufgenommen, welches in diesem Beispiel durch ein Kugellager gebildet wird. Das Wälzlager 5 weist einen Außenring 6, einen Innenring 7 sowie eine Vielzahl von Wälzkörpern 8 auf, die zwischen den Lagerringen (Außenring 6 und Innenring 7) um eine Rotationsachse 9 des Wälzlagers 5 abwälzen.

Der Außenring 6 ist drehfest zu dem Gehäuse 2 festgelegt. Der Innenring 7 hingegen ist gegenüber dem Gehäuse 2 drehbar.

Erfindungsgemäß weist die Lageranordnung 1 einen Messaufnehmer 10 auf, der mit einem Messgeber 11 zusammenwirkt und die Drehzahl bzw. den Drehwinkel einer in dem Wälzlager 5 gelagerten Welle 12 zu erfassen. Dabei ist der Messaufnehmer 10 über ein Halteelement 13, welches mittels einer Schraubverbindung 14 an dem Gehäuse 2 festgeschraubt ist, drehfest mit dem Gehäuse 2 verbunden. Der Messgeber 11 wiederum ist drehfest mit dem zum Gehäuse 2 drehbaren Lagering (Innenring 7) verbunden. Insbesondere ist der Messgeber 11 mittels einer Schraubverbindung 15 an einem mit dem Innenring 7 verbundenen Ring 16 angeschraubt.

### Bezugszeichenliste

- 1: Lageranordnung
- 2: Gehäuse
- 3: Bohrungen
- 4: Umgebungskonstruktion
- 5: Wälzlager
- 6: Außenring
- 7: Innenring
- 8: Wälzkörper
- 9: Rotationsachse
- 10: Messaufnehmer
- 11: Messgeber
- 12: Welle
- 13: Halteelement
- 14: Schraubverbindung
- 15: Schraubverbindung
- 16: Ring

## Patentansprüche

1. Lageranordnung (1) umfassend ein in einem anschraubbaren Gehäuse (2) aufgenommenes Wälzlager (5) mit einem Außenring, einem Innenring (7) sowie einer Vielzahl von Wälzkörpern (8), die zwischen dem Außenring (6) und dem Innenring (7) um eine Rotationsachse (9) des Wälzlagers (5) abrollen, wobei entweder der Außenring (6) oder der Innenring (7) gegenüber dem Gehäuse (2) drehfest festgelegt ist und der jeweils andere Lagerring gegenüber dem Gehäuse (2) drehbar ist, **dadurch gekennzeichnet, dass** ein Messaufnehmer (10) drehfest mit dem Gehäuse (2) verbunden ist und dass ein mit dem Messaufnehmer (10) zusammenwirkender Messgeber (11) drehfest mit dem gegenüber dem Gehäuse (2) drehbaren Lagerring verbunden ist bzw. ein mit dem Messaufnehmer (10) zusammenwirkender Messgeber (11) durch den gegenüber dem Gehäuse (2) drehbaren Lagerring gebildet wird.

2. Lageranordnung (1) nach Anspruch 1, **dadurch gekennzeichnet, dass** das Gehäuse (2) ein Stehlagergehäuse ist.

3. Lageranordnung (1) nach Anspruch 1, **dadurch gekennzeichnet, dass** das Gehäuse (2) ein Flanschlagergehäuse ist.

4. Lageranordnung (1) nach einem der Ansprüche 1 bis 3, **dadurch gekennzeichnet, dass** der Messaufnehmer (10) direkt an dem Gehäuse (2) befestigt ist.

5. Lageranordnung (1) nach Anspruch 4, **dadurch gekennzeichnet, dass** das Gehäuse (2) zur Befestigung des Messaufnehmers (10) eine Bohrung und/oder einen Vorsprung aufweist.

6. Lageranordnung (1) nach einem der Ansprüche 1 bis 3, **dadurch gekennzeichnet, dass** der Messaufnehmer (10) an einem Halteelement (13) befestigt ist, welches drehfest mit dem Gehäuse (2) verbunden ist.

7. Lageranordnung (1) nach einem der vorangegangen Ansprüche, **dadurch gekennzeichnet, dass** der Messgeber (11) mit dem gegenüber dem Gehäuse (2) drehbaren Lagerring durch Pressen, Nieten, Kleben, Klinchen, Clipsen, Löten oder Schweißen verbunden ist.

8. Lageranordnung (1) nach einem der vorangegangen Ansprüche, **dadurch gekennzeichnet, dass** der mit dem Messgeber (11) zusammenwirkende Messaufnehmer (10) zur Erfassung einer Geschwindigkeit und/oder eines Drehwinkels des sich gegenüber dem Gehäuse (2) drehbaren Lagerringes bzw. eines mit diesem Lagerring verbundenen Maschinenteils ausgelegt ist.

9. Lageranordnung (1) nach einem der vorangegangen Ansprüche, **dadurch gekennzeichnet, dass** es sich bei dem Messaufnehmer (10) um einen Hallsensor, einen MR-Sensor, einen induktiven Sensor, einen kapazitiven Sensor oder einen potentiometrischen Sensor handelt.
